# EUROPÄISCHE PATENTANMELDUNG

(11) **EP 3 859 580 A1**
(43) Veröffentlichungstag der Anmeldung: **04.08.2021**
(21) Anmeldenummer: 20154357.6
(22) Anmeldetag: 29.01.2020
(51) Int. Cl.: G06F 21/60

(54) **WIRKSAMKEIT EINER GERÄTEINTEGRITÄTSÜBERWACHUNG**

(71) Anmelder: Siemens Aktiengesellschaft, 80333 München (DE)
(72) Erfinder: Falk, Rainer, 85586 Poing (DE); Feist, Christian Peter, 80689 München (DE); Fries, Steffen, 85598 Baldham (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Die Erfindung gibt ein automatisiertes Verfahren zum Betrieb eines Rechensystems (1), wobei:
- in einem ersten Betriebszustand für die ordnungsgemäße Funktion des Rechensystems (1) nicht relevante Daten korrumpiert werden (100) und
- überprüft wird (200), ob eine das Rechensystem (1) überwachende Integritätsüberwachungseinheit (2) die Korruption erkennt.

Eine zugehörige Vorrichtung sowie ein zugehöriges computerlesbares Medium werden ebenfalls angegeben.

## Beschreibung

### GEBIET DER ERFINDUNG

Die Erfindung betrifft ein automatisiertes Verfahren zum Betrieb eines Rechensystems, eine Vorrichtung zum Ausführen des automatisierten Verfahrens sowie ein zugehöriges computerlesbares Medium zur Überprüfung der Wirksamkeit einer Geräteintegritätsüberwachung.

### HINTERGRUND DER ERFINDUNG

In einem industriellen Zusammenhang verwendete Komponenten (z.B. speicherprogrammierbare Steuerung, Steuergerät, Feldgerät, SCADA-System, MES-System, IoT-Gateway, Backend-Serversystem) sind einer Reihe von potenziellen Angriffen ausgesetzt. Um das Eindringen eines Angreifers zu erkennen, kann ein sog. "Runtime Health Check (RHC)" verwendet werden, der die Integrität ausgewählter Gerätekomponenten (z.B. Steuerungs- oder SCADA (Supervisory Control and Data Acquisition) -Software, Firmware einer PLC (programmable logic controller), laufende Prozesse) zur Laufzeit überwacht. Eine durch einen Angriff verursachte Integritätsverletzung kann anschließend auf unterschiedliche Art und Weise gemeldet werden, wie z.B. durch Verschicken einer E-Mail, Blinken einer LED an einer Steuerung, Schreiben einer Log-Nachricht, Auslösen eines Systemalarms in einem SCADA-System. Zudem können Mechanismen zum Erschweren des Ausnutzens von Schwachstellen (z.B. Compiler-Härtungsoptionen) verwendet werden. In allen Fällen ist die Wirksamkeit dieser Integritätsmaßnahmen (insb. Überwachungs- und Härtungsmaßnahmen) sehr wichtig.

Die auf einer Komponente verwendeten Integritätsmechanismen können aus verschiedenen Gründen fehlerhaft sein, z.B. durch eine versehentliche Änderung der RHC-Konfiguration durch einen Betreiber, unerkannte Fehler bei der Entwicklung die z.B. zu einem Absturz der RHC-Komponente führen, gezielte Manipulation durch einen Angreifer, Fehlkonfiguration durch einen Administrator, oder Fehler in bzw. bei der Verwendung von Compiler-Härtungsoptionen.

Die nachveröffentlichte Patentanmeldung DE 10 2019 219870.8 der Anmelderin offenbart eine Anordnung zur Integritätsüberwachung eines Rechensystems, das eingerichtet ist, Daten zu verarbeiten, wobei die Anordnung ein weiteres Rechensystem, das eingerichtet ist, die Integrität der Daten oder der verarbeiteten Daten zu erkennen, und mehrere Einweg-Koppelvorrichtungen, die zum rückwirkungsfreien Übertragen der Daten und der verarbeiteten Daten von dem Rechensystem an das weitere Rechensystem eingerichtet sind, aufweist.

Es sind allgemein Host-basierte Angriffserkennungs-Tools bekannt (Host-based Intrusion Detection System - HIDS). Diese erkennen ungewöhnliches bzw. unzulässiges Verhalten von auf einem Host ausgeführter Software. Beispielsweise kann OSSEC verwendet werden, um periodisch die Integrität von Dateien zu überprüfen und allgemein Änderungen am Dateisystem festzustellen. Die Reaktion auf eine Integritätsverletzung kann dabei z.B. das Senden einer E-Mail an einen Administrator, Erzeugen eines Log-Eintrags, oder dem Generieren einer Meldung in einem übergeordneten System (SIEM, SCADA, etc.) umfassen.

Es ist bekannt, eine Runtime Health Check Funktionalität zu verwenden, um generell die Integrität von kritischen Systemressourcen (z.B. Dateien, Prozesse, Read-Only Speicherbereiche einer PLC) zur Laufzeit zu überprüfen. Diese Funktionalität kann beispielsweise als eigenständiger Prozess auf einem Serversystem (z.B. HIDS), oder Task auf einem Echtzeitbetriebssystem realisiert sein.

Watchdog-Mechanismen sind bekannt, um die Funktionsfähigkeit von Komponenten zu überwachen. Beispielsweise kann eine in einer CPU realisierte Watchdog-Funktion verwendet werden, um sicherzustellen, dass ein Software-bedingter Ausfall nicht zu einem Totalausfall des Gerätes führt. Schlägt der Watchdog an, kann z.B. eine bestimmte Adresse angesprungen werden (z.B. Reset Vector). Allgemein kann ein Watchdog z.B. auch in Software implementiert sein.

Es ist prinzipiell bekannt, die Funktionsfähigkeit von Software auf einem Gerät mittels dedizierter Tools und Schnittstellen zu ermitteln, z.B. Prozessliste ausgeben mit ps, Linux Kernel Instrumentierung mit Kprobes, oder dem Verwenden eines Software Debuggers. Mit solchen Methoden lässt sich allerdings entweder nur sehr umständlich oder gar nicht auf die Wirksamkeit einer Geräteintegritätsfunktion schließen. Die bekannten Mechanismen erfordern zusätzlich typischerweise allerdings eine manuelle Ausführung und/oder Interpretation der Daten.

Es sind unterschiedliche Ansätze auf Systemebene zum Einschränken der Privilegien von einer oder mehreren Software-komponenten bekannt. Unter Linux sind hier beispielsweise Mandatory Access Control (MAC, z.B. SELinux oder AppArmor), system call Filtering (seccomp), Linux capabilities, oder leichtgewichtige Virtualisierungsmechanismen (Namespaces) bekannt. Bei MAC werden z.B. Rechte von Applikationen mittels Zugriffsregeln in einer Policy definiert, welche anschließend durch den OS-Kernel umgesetzt werden. Führt eine Applikation eine für sie nicht zulässige Operation aus, kann diese unterbunden oder gemeldet werden. Dies dient als Schutz gegen einen Angreifer, der Kontrolle über eine oder mehrere Applikationen besitzt.

Bekannte Härtungsmaßnahmen gegen Exploits, die versuchen vorhandene Schwachstellen auszunutzen, sind z.B. Compiler-basierte Härtungsoptionen (CFI Control Flow Integrity, Stack Protection, Memory ProtectionMicrosoft Control Flow Guard). Bei der Verwendung solcher Optionen werden beim Kompilieren eines Programms zusätzliche Überprüfungen des Programmablaufs hinzugefügt. Während der Ausführung des Programms wird daraufhin überprüft, ob der Ablauf des Programms korrekt (wie vom Programmierer gewünscht) abläuft und nicht durch einen Angreifer, z.B. durch Manipulation von Sprungadressen, manipuliert wurde. Sobald der Ablauf während der Ausführung eines Programms manipuliert wird, wird dieses Vorhaben erkannt und eine konfigurierte Reaktion ausgeführt, z.B. Beenden des Programms oder Generieren eines Logeintrags.

Es sind auch Tools zur Analyse der Konfiguration bzw. Angriffsoberfläche von Betriebssystemen bekannt, z.B. Lynis für Linux oder Attack Surface Analyzer von Microsoft für Windows. Diese Tools scannen das Betriebssystem und überprüfen beispielsweise, ob die Zugriffsrechte auf Dateien ordnungsgemäß konfiguriert sind.

### ZUSAMMENFASSUNG DER ERFINDUNG

Es ist Aufgabe der Erfindung, eine Lösung anzugeben, mit deren Hilfe Geräteintegritätsfunktionen auf ihre Wirksamkeit im Feld überprüft werden können.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Zusammengefasst gibt die Erfindung an, die Wirksamkeit einer Geräteintegritätsfunktion durch das Ausführen einer rückwirkungsfreien Aktion auf einer überwachten bzw. geschützten Komponente zu überprüfen. Dabei wird eine überwachte Komponente (Datei, Prozess, Read-Only Speicherbereich), bzw. eine geschützte Komponente (Programmbinärdatei mit CFI-Schutz) so modifiziert oder ausgeführt, dass die Überwachungs- bzw. Schutzfunktion ein unzulässiges Ereignis erkennt, dies aber keine Auswirkung auf die korrekte Funktion des Gerätes bzw. Systems hat. Die Ausführung kann während einer Startphase (Boot), zur Laufzeit, oder in einem speziellen Diagnosebetriebsmodus erfolgen. Auch ist es möglich, die Überprüfung vor Aktivierung eines operativen Betriebsmodus oder bei Aktivierung einer Ein-/Ausgabeschnittstelle oder bei der Konfiguration eines Ein-/Ausgabemoduls durchzuführen.

Somit kann in einer Testumgebung, aber insbesondere auch in einem operativen Umfeld, überprüft werden, ob die verwendeten Geräteintegritätsfunktionen tatsächlich (noch) wirksam sind.

Grundsätzlich kann die Rückwirkungsfreiheit auf zwei unterschiedliche Art und Weisen realisiert werden.
- Durch eine Verwendung von dedizierten, nicht funktionseinschränkenden Bereichen bzw. Funktionen von überwachten bzw. geschützten Komponenten. Beispielsweise können nicht verwendete, erweiterte Attribute von Dateien oder nicht verwendete Bereiche von überwachten Programmbibliotheken verändert werden. Dies hat keine Auswirkung auf die semantische Integrität der Programmbinärdatei. Vorteilhaft ist, dass damit verifiziert werden kann, ob ein Run-time Health Check (RHC) auf Änderungen der wirklich überwachten Dateien reagiert. Analog lassen sich spezielle Funktionen einbauen, die unter Eingabe bestimmter Parameter zu einer unzulässigen Aktion führen, z.B. dem Ändern des Kontrollflusses, der durch einen CFI-Mechanismus unterbunden wird.
   Es muss zwischen legitimen Aktionen, die die Wirksamkeit der Härtungsmaßnahmen überprüfen, und denen eines Angreifers unterschieden werden können. Auch dürfen die legitimen Aktionen die Sicherheit der Komponente nicht beeinträchtigen, d.h. das Einbauen eines pseudo-Exploits muss unter höchster Vorsicht erfolgen.
- Durch eine Verwendung von dedizierten Komponenten, die nicht zur Funktionalität des überwachten Systems/Geräts/Software beitragen. Beispielsweise können spezielle, überwachte Dummy-Dateien für diesen Zweck vorgesehen werden. Weiterhin können auch dedizierte Programme bzw. Funktionen vorgesehen werden, die eine unzulässige Operation ausführen, z.B. Zugriff auf eine bestimmte Dummy-Datei. Vorteilhaft ist, dass die Unterscheidung zwischen legitimen und schadhaften Änderungen einfacher ist.
   Allerdings erhält man nur eine Aussage darüber, ob ein Geräteintegritätsmechanismus prinzipiell auf dem Gerät reagiert, aber nicht, ob er auch auf Aktionen auf kritische Komponenten reagieren würde. Eine RHC Komponente wird i.A. verwendet, um die Integrität von kritischen Systemressourcen z.B. Dateien, Prozesse, Read-Only Speicherbereiche einer PLC und somit typischerweise der Grundfunktion des überwachten Gerätes zur Laufzeit zu überprüfen. Dieser RHC kann beispielsweise als eigenständiger Prozess auf einem Serversystem (z.B. HIDS), oder Task auf einem Echtzeitbetriebssystem ausgebildet sein. Mechanismen zum Schutz der Geräteintegrität, wie z.B. Compiler-basierte Härtungsoptionen (CFI, Stack-Protection) oder MAC (SELinux / AppArmor), werden verwendet, um das Ausnutzen von vorhandenen Schwachstellen zu erschweren oder das Ausmaß einer solchen Ausnutzung zu reduzieren.

Die Erfindung beansprucht ein automatisiertes Verfahren zum Betrieb eines Rechensystems, beispielsweise ein Automatisierungssystem oder Steuerungssystem, wobei:
- in einem ersten Betriebszustand für die ordnungsgemäße Funktion des Rechensystems nicht relevante Daten korrumpiert werden und
- überprüft wird, ob eine das Rechensystem überwachende Integritätsüberwachungseinheit die Korruption erkennt.

Eine Integritätsüberwachungseinheit kann dabei sowohl eine bereits erfolgte Korruption wie auch den Versuch einer Korruption detektieren.

Das Rechensystem weist mindestens eine Recheneinheit, einen Rechner bzw. eine CPU auf. Der erste Betriebszustand entspricht einem Testbetriebszustand.

In einer Weiterbildung kann die Korruption durch eine Änderung von Dateien, eine Veränderung von Prozessen und/oder einer Änderung von Speicherregionen erfolgen.

In einer weiteren Ausbildung können nicht verwendete, erweiterte Attribute von Dateien oder nicht verwendete Bereiche von überwachten Dateien korrumpiert werden.

In einer weiteren Ausgestaltung können nicht für die Funktion des Rechensystems vorgesehene, überwachte Dummy-Dateien korrumpiert werden oder dedizierte Programme bzw. Funktionen vorgesehen sein, die eine unzulässige Operation ausführen. Beispielsweise greift ein Programm auf eine Dummy-Datei zu.

In einer Weiterbildung kann die Integritätsüberwachungseinheit eine "Run-time Health Check" Funktionalität aufweisen.

In einer Weiterbildung der Erfindung kann die Korruption, mit Ausnahme bezüglich der Integritätsüberwachungseinheit, bezüglich des Rechensystems rückwirkungsfrei erfolgen.

In einer weiteren Ausgestaltung kann die Integritätsüberwachungseinheit eingerichtet sein, die Integrität der Daten des Rechensystems zu erkennen.

In einer Weiterbildung der Erfindung kann das Rechensystem eine SCADA-Einheit aufweisen. SCADA ist in der nachveröffentlichten europäischen Patentanmeldung mit der Anmeldenummer EP 19170072.3 näher beschrieben.

In einer Weiterbildung der Erfindung kann beim Erkennen einer Korruption eine vorab gespeicherte Verifizierungsreaktion ausgeführt werden.

Die Erfindung beansprucht auch eine Vorrichtung zur Überprüfung der Wirksamkeit einer Integritätsüberwachung eines Rechensystems, aufweisend:
- eine Integritätsüberwachungseinheit, die eingerichtet ist, die Integrität von Daten des Rechensystems zu überwachen,
- eine Angriffseinheit, die eingerichtet ist, in einem ersten Betriebszustand für die ordnungsgemäße Funktion des Rechensystems nicht relevante Daten zu korrumpieren.

In einer Weiterbildung weist die Vorrichtung eine Überprüfungseinheit, in der die zu korrumpierenden Daten abgelegt sind, auf.

In einer weiteren Ausgestaltung stammen die zu korrumpierenden Daten von Dateien, von Prozessen und/oder von Speicherregionen.

In einer weiteren Ausgestaltung können die Daten zu nicht verwendeten, erweiterten Attributen von Dateien oder zu nicht verwendeten Bereichen von überwachten Dateien gehören.

In einer weiteren Ausgestaltung können die Daten zu nicht für die Funktion des Rechensystems vorgesehenen, überwachten Dummy-Dateien oder zu dedizierten Programmen bzw. Funktionen, die eine unzulässige Operation ausführen, gehören.

In einer Variante werden die Daten, d.h. Dateien oder Programme und Funktionen, die nicht für die Funktion des Rechensystems vorgesehen sind, abhängig vom aktuellen Betriebsmodus des Rechensystems ermittelt. Dies hat den Vorteil, dass in einem nicht operativen Betriebsmodus Tests mit Daten durchgeführt werden können, die im operativen Betriebsmodus für die Funktion des Rechensystems vorgesehen sind.

Außerdem beansprucht die Erfindung ein computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines erfindungsgemäßen Verfahrens ausgeführt werden, wenn das Computerprogramm auf der Einrichtung ausgeführt wird.

Ein Vorteil der Erfindung ist insbesondere, dass überprüft werden kann, ob ein Geräteintegritätsmechanismus, wie zum Beispiel ein Intrusion Detection System, oder eine andere Härtungsmaßnahme, um das Ausnutzen von Schwachstellen durch einen Angreifer zu erschweren oder zu verhindern oder zu erkennen, prinzipiell funktionsfähig und somit wirksam ist. Dies ist insbesondere für industrielle Geräte von Vorteil, da diese oft sowohl eine lange Zeit im Feld verwendet werden und in einigen Fälle auch nur selten neu gestartet werden. Falls eine Schutzfunktion nicht wirksam wäre, würde dies ohne die Erfindung nicht erkannt werden, da die reguläre Funktion des Geräts nicht beeinträchtigt wäre.

Die Erfindung schlägt hierzu vor, gezielte, rückwirkungsfreie Aktionen, z.B. Änderungen an überwachten Dateien, Prozessen, Speicherregionen, etc., vorzunehmen und zu überprüfen, ob der entsprechende Geräteintegritätsmechanismus ordnungsgemäß reagiert. Die Aktionen dürfen dabei keinen Einfluss auf die Funktionsfähigkeit der modifizierten Komponente und des entsprechenden Gerätes bzw. Systems haben.

Die geschäftlichen Auswirkungen bei Verwendung der Erfindung umfassen vor allem eine bessere und robustere Integritätsüberwachung/-schutz von Geräten und Systemen. Dies kann zudem zu einer Verbesserung des Images hinsichtlich der Sicherheit und Nachhaltigkeit von Produkten beitragen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Ablaufdiagramm des automatisierten Betriebsverfahrens und
- FIG. 2: ein Blockschaltbild eines Automatisierungssystems als Ausführungsbeispiel.

### DETAILLIERTE BESCHREIBUNG DER ERFINDUNG

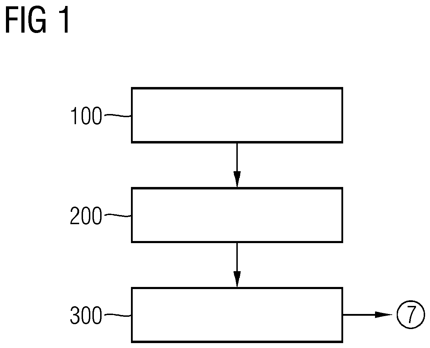

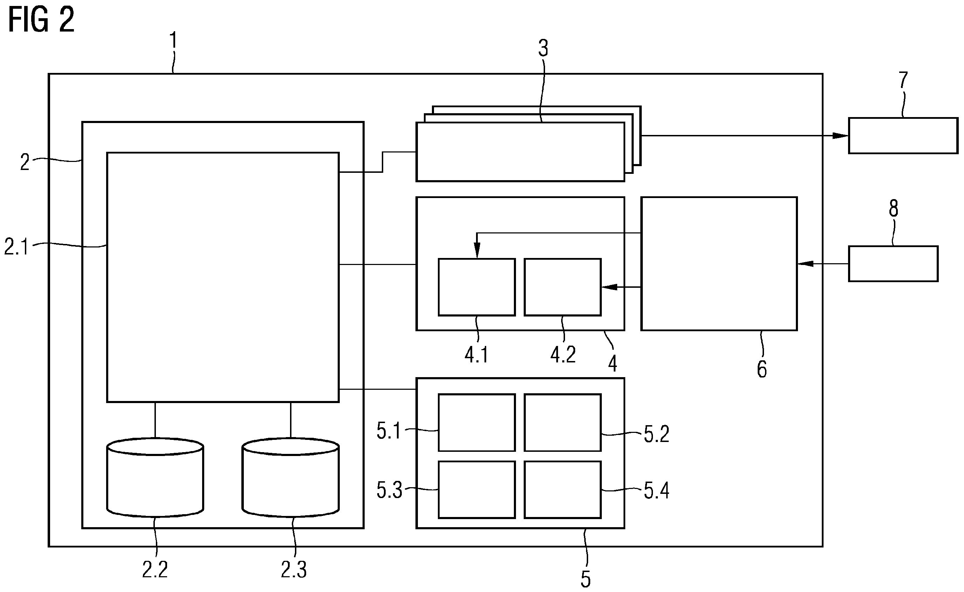

FIG. 1 zeigt ein Ablaufdiagramm des automatisierten bzw. computerimplementierten Verfahrens zum Betrieb eines Automatisierungssystems 1, als Beispiel eines Rechensystems, als Blockschaltbild dargestellt in FIG. 2. In einem ersten Betriebszustand werden in einem ersten Schritt 100 für die ordnungsgemäße Funktion des Automatisierungssystems 1 nicht relevante Daten, wie beispielsweise überwachte Dummy Dateien 4.1 und/oder CFI gehärtete Programmbinärdateien 4.2, bzw. die daraus resultierenden Prozesse korrumpiert.

In einem zweiten Schritt 200 wird überprüft, ob eine das Automatisierungssystem 1 die Integrität von Daten und Prozesse überwachende RHC Einheit 2 die Korruption erkennt. Danach wird im Schritt 300 bei Erkennen einer Korruption eine vorab gespeicherte Reaktion 3 ausgeführt. Beispielsweise kann eine Warnung an einen Nutzer des Automatisierungssystems 1 ausgegeben werden (= Verifizierungsreaktionsausgabe 7).

FIG. 2 zeigt ein Blockschaltbild einer beispielhaften Ausführung der Erfindung, in der auf einem rechnerbasierten Automatisierungssystem 1, wie z.B. Linux-basierter SCADA Server, die Integrität von kritischen Programmbinärdateien durch eine RHC Einheit 2 (Run-time Health Check) überprüft und das Ausnutzen von Schwachstellen durch Compiler-Härtungsoptionen erschwert werden soll. Ein Run-time Health Check Agent 2.1 überwacht die Integrität ausgewählter Gerätekomponenten, wie z.B. Steuerungs- oder SCADA (Supervisory Control and Data Acquisition) -Software, Firmware einer PLC, laufende Prozesse, zur Laufzeit.

FIG. 2 zeigt eine RHC Einheit 2, die auf dem Automatisierungssystem 1, wie z.B. einem Industrie-PC mit einer SCADA Software in einer SCADA Einheit 5, läuft. In FIG. 2 ist diese als Prozess in einem Standard-Betriebssystem (z. B. Linux oder Windows) ausgebildet, wobei der Prozess die Integrität von kritischen Dateien einer SCADA Software überwacht. Die dafür eingesetzte RHC Einheit 2 (auch als Integritätsüberwachungseinheit bezeichenbar) besitzt zur Überwachung einen sogenannten Run-time Health Check Agent 2.1.

In einer Variante kann die RHC Einheit 2 auch als ein Task in einem Echtzeitbetriebssystem ausgebildet sein, die beispielsweise die Integrität von Read-Only Speicherseiten, die kritische Betriebssystemdaten (z.B. Instruktionen der Firmware) enthalten, überprüft.

Die SCADA Einheit 5 ist eine Vorrichtung zum Überwachen und Steuern technischer Prozesse in dem Automatisierungssystem 1 mittels eines Computer-Systems. SCADA bezieht sich auf zentrale/dezentrale Systeme, die die gesamte Installation überwachen, visualisieren, sowie steuern und regeln. Der größte Teil der Regelung wird automatisch durch Fernbedienungsterminals oder durch Speicherprogrammierbare Steuerungen (SPS) beziehungsweise Level-1-Automation durchgeführt. Die Aufgabe der Level-2-Automation ist es, die Funktion der Level-1-Automation zu optimieren, sowie Stellgrößen und Sollwerte auszugeben. Die Level-3-Automation dient der Planung, Qualitätssicherung und Dokumentation. Die Datenerfassung beginnt gewöhnlich mit dem Level 1 und enthält die Koppelung an Sensoren, Messgeräte und Statusinformationen wie Schalterstellungen, die von einer Automatisierungskomponente, z.B. einer Speicherprogrammierbaren Steuerung oder dem SCADA-System, erfasst werden. Die Daten werden dann in einer benutzerfreundlichen Darstellung präsentiert und ermöglichen es, steuernd in den Prozess einzugreifen.

SCADA-Einheiten 5 implementieren typischerweise eine verteilte Datenbasis, die Datenpunkte beinhaltet. Ein Datenpunkt enthält einen Ein- oder Ausgangswert, der durch das System überwacht und gesteuert wird. Ein physischer Datenpunkt stellt einen Eingang oder Ausgang dar, während ein berechneter Punkt durch mathematische Operationen aus dem Zustand des Systems hervorgeht. Normalerweise werden Datenpunkte als eine Kombination von Werten mit Zeitstempel behandelt. Eine Serie von Datenpunkten ermöglicht die historische Auswertung. Die Kommunikation innerhalb der SCADA-Einheit 5 erfolgt auf der Basis von beispielsweise TCP- oder UDP-basierten Internettechniken. Mit der SCADA-Einheit 5 werden die technischen Prozesse in dem Automatisierungssystem 1 mittels einer Software, beispielsweise WinCC überwacht. "Windows Control Center" (WinCC) ist ein Computerbasiertes Prozessvisualisierungssystem, das als eine eigenständige SCADA-Einheit 5 oder als Mensch-Maschine-Schnittstelle für Prozessleitsysteme wie die SIMANTIC PCS 7 der Siemens AG eingesetzt wird.

Welche Teile bzw. Komponenten überprüft werden, ist durch die Regeln 2.2 (Rules/Check Functions) festgelegt. Das Überwachen erfolgt beispielsweise durch das periodische Abgleichen der Zustände der überprüften Komponenten mit Referenzwerten 2.3 (References, z.B. kryptographische Prüfsummen von Dateien), die z.B. in einer Datenbank hinterlegt sind. Spricht die RHC Einheit 2 an, werden Änderungen an den überprüften Komponenten erkannt, und es kann eine entsprechende Verifikationsreaktion 3 als Verifikationsreaktionsausgabe 7 eingeleitet werden, wie z.B. ein Verschicken einer E-Mail, Generieren eines Log-Eintrags, Versetzen des Automatisierungssystems 1 in einen Fehlerzustand, Setzen eines Schaltsignals, Generieren eines Systemalarms in der SCADA-Einheit 5.

Neben einer RHC Einheit 2 können auch Maßnahmen zum Schutz der Geräteintegrität zum Einsatz kommen, z.B. durch das Kompilieren von kritischen Softwarekomponenten mit CFI-Schutz, oder eine Isolation von Software-Komponenten durch ein MAC (Mandatory Access Control) -System. Diese verhindern das Ausnutzen von Schwachstellen, bzw. schränken eine kompromittierte Softwarekomponente in ihrem Handlungsspielraum ein (z.B. Black-Listing bestimmter Systemaufrufe).

Um die Wirksamkeit der verwendeten Geräteintegritätsmechanismen zu überprüfen, werden überwachte Daten einer Überwachungseinheit 4 gezielt und rückwirkungsfrei modifiziert und die entsprechende Reaktion wird verifiziert. Dazu können in einer Variante spezielle Dummy-Dateien 4.1 vorgesehen werden, die ebenfalls durch die RHC Einheit 2 mitgeprüft werden. Zudem können Programme 4.2 vorgesehen sein, die eine oder mehrere Funktionen ausführen können, die durch Härtungsmaßnahmen wie CFI (Control-flow integrity), MAC, o.Ä. prinzipiell verhindert werden sollten, wie beispielsweise das Öffnen eines Netzwerk-Sockets oder ein Ändern des Kontrollflusses durch Ausnutzen einer vorhandenen Schwachstelle.

Allgemein können auch unbenutzte Bereiche der regulär überwachten Komponenten verwendet werden, wie z.B. unbenutzter Bereich einer Gerätefirmware, erweitertes Attribut einer Datei, dedizierte Sektion einer ELF-Datei, um Änderungen durchzuführen.

Erfindungsgemäß wird eine derartige Aktion (z.B. Modifikation einer überprüften Dummy-Datei 4.1) durch eine Angriffseinheit 6 ausgeführt und anschließend eine Verifikationsreaktion 3 durch die RHC Einheit 2 erzeugt, wobei durch den RHC Agent 2.1 überprüft wird, ob der entsprechende Geräteintegritätsmechanismus (noch) korrekt reagiert.

Die Verifikationsreaktionen 3 können gleich oder unterschiedlich zu denen sein, die bei einem tatsächlichen Angriff ausgeführt werden. So kann z.B. ein dedizierter Systemalarm durch den RHC Agent 2.1 erzeugt werden, wenn eine Dummy-Datei 4.1 verändert wird. Um die Wirksamkeit von Schutzmaßnahmen wie CFI oder MAC generell zu überprüfen (mit 4.2), können spezielle Test-Programme ausgeführt werden, die prinzipiell unerlaubte Operationen ausführen, ohne dabei eine Auswirkung auf die generelle Gerätefunktionalität zu haben.

Der Schutzmechanismus führt dann z.B. zum Absturz des Dummy-Programmes, oder unterbindet die Operation mit einer Fehlermeldung. Als Teil der erwarteten Verifikationsreaktionen 3 können auch Informationen über die Änderungen bereitgestellt werden, z.B. Hash-Wert der modifizierten Dateien. So kann die Verifikationsreaktion 3 beispielsweise als kritisch (= durch einen Angreifer ausgelöst), oder als Test-Reaktion im Sinne dieser Erfindung eingeordnet werden. Jegliche Änderungen können rückgängig gemacht werden. Die Verifikationsreaktionen 3 werden als Verifikationsreaktionsausgabe 7 einem Nutzer zur Verfügung gestellt.

Das Auslösen (Trigger 8) einer solchen Reaktion und das Auswerten der Test-Reaktion (= erster Betriebszustand) kann dabei manuell, automatisiert/periodisch, vor dem Start von kritischer Software bzw. beim Systemstart, in einem bestimmten Systemzustand (z.B. Wartungsmodus) oder bei dem Verbinden des Automatisierungssystems 1 mit einem Netzwerk erfolgen. Die Aktion (Trigger 8) kann z.B. über einen Daemon-Prozess (unter Unix oder einem unixartigen Systemen ein Programm, das im Hintergrund abläuft und bestimmte Dienste zur Verfügung stellt), dedizierten Echtzeittask, ein Ansteckmodul (USB-Dongle, PLC-Erweiterungsmodul, welches mit einer PLC (Programmable Logic Controller) über einen Rückwandbus kommuniziert), eine Debug-Schnittstelle, eine GUI-Anwendung durch einen Gerätebetreiber, ausgelöst werden.

Der auslösende und überprüfende Teil kann dabei prinzipiell getrennt (u.a. auch auf unterschiedlichen Geräten / Systemen) oder in einer gemeinsamen Komponente realisiert werden.

Zeigt die überprüfte Geräteintegritätsfunktion keine oder nicht die erwartete Reaktion, kann diese als nicht wirksam eingestuft und entsprechend darauf reagiert werden (analog zu den Reaktionen eines RHC Mechanismus).

Das Überprüfen des Geräteintegritätsmechanismus kann wie bei einem Watchdog periodisch ausgeführt werden. Möglich ist auch, die Überprüfung bei jedem Neustart durchzuführen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Automatisierungssystem
- 2: RHC Einheit
- 2.1: Run-time Health Check Agent
- 2.2: Regeln
- 2.3: Referenzen
- 3: Verifikationsreaktion
- 4: Überprüfungseinheit
- 4.1: Überwachte Dummy Datei
- 4.2: CFI-gehärtete Dummy Daten
- 5: SCADA Einheit
- 5.1: Konfigurationsdatei
- 5.2: CFI-gehärtete Binärdaten
- 5.3: Netzwerk Operationen
- 5.4: Prozesse
- 6: Angriffseinheit
- 7: Verifikationsreaktionsausgabe
- 8: Trigger

- 100: erster Schritt
- 200: zweiter Schritt
- 300: dritter Schritt

## Patentansprüche

1. Automatisiertes Verfahren zum Betrieb eines Rechensystems (1),
**dadurch gekennzeichnet, dass**
- in einem ersten Betriebszustand für die ordnungsgemäße Funktion des Rechensystems (1) nicht relevante Daten korrumpiert werden (100) und
- überprüft wird (200), ob eine das Rechensystem (1) überwachende Integritätsüberwachungseinheit (2) die Korruption erkennt.

2. Verfahren nach Anspruch 1,
**dadurch gekennzeichnet, dass**
die Korruption durch eine Änderung von Dateien, eine Veränderung von Prozessen und/oder einer Änderung von Speicherregionen erfolgt.

3. Verfahren nach Anspruch 2,
**dadurch gekennzeichnet, dass**
nicht verwendete, erweiterte Attribute von Dateien oder nicht verwendete Bereiche von überwachten Dateien korrumpiert werden.

4. Verfahren nach Anspruch 2,
**dadurch gekennzeichnet, dass**
nicht für die Funktion des Rechensystems (1) vorgesehene, überwachte Dummy-Dateien (4.1) korrumpiert werden oder dedizierte Programme bzw. Funktionen vorgesehen sind, die eine unzulässige Operation ausführen.

5. Verfahren nach einem der vorhergehenden Ansprüche,
**dadurch gekennzeichnet, dass**
die Integritätsüberwachungseinheit (2) eine "Run-time Health Check" Funktionalität (2.1) aufweist.

6. Verfahren nach einem der vorhergehenden Ansprüche,
**dadurch gekennzeichnet, dass**
die Korruption, mit Ausnahme bezüglich der Integritätsüberwachungseinheit (2), bezüglich des Rechensystems (1) rückwirkungsfrei erfolgt.

7. Verfahren nach einem der vorhergehenden Ansprüche,
**dadurch gekennzeichnet, dass**
die Integritätsüberwachungseinheit (2) eingerichtet ist, die Integrität der Daten des Rechensystems (1) zu erkennen.

8. Verfahren nach einem der vorhergehenden Ansprüche,
**dadurch gekennzeichnet,**
**dass** das Rechensystem (1) eine SCADA-Einheit (5) aufweist.

9. Verfahren nach einem der vorhergehenden Ansprüche,
**dadurch gekennzeichnet, dass**
bei Erkennen einer Korruption eine vorab gespeicherte Verifizierungsreaktion (3) ausgeführt wird.

10. Vorrichtung zur Überprüfung der Wirksamkeit einer Integritätsüberwachung eines Rechensystems (1),
**gekennzeichnet durch**:
- eine Integritätsüberwachungseinheit (2), die eingerichtet ist, die Integrität von Daten des Rechensystems (1) zu überwachen,
- eine Angriffseinheit (6), die eingerichtet ist, in einem ersten Betriebszustand für die ordnungsgemäße Funktion des Rechensystems (1) nicht relevante Daten zu korrumpieren.

11. Vorrichtung nach Anspruch 10,
**gekennzeichnet durch**:
- eine Überprüfungseinheit (4), in der die zu korrumpierenden Daten abgelegt sind.

12. Vorrichtung nach ein Anspruch 10 oder 11,
**dadurch gekennzeichnet, dass**
die zu korrumpierenden Daten von Dateien, von Prozessen und/oder von Speicherregionen stammen.

13. Vorrichtung nach Anspruch 12,
**dadurch gekennzeichnet, dass**
die Daten zu nicht verwendeten, erweiterten Attributen von Dateien oder zu nicht verwendeten Bereichen von überwachten Dateien gehören.

14. Vorrichtung nach Anspruch 12,
**dadurch gekennzeichnet, dass**
die Daten zu nicht für die Funktion des Rechensystems vorgesehenen, überwachten Dummy-Dateien (4.1) oder zu dedizierten Programmen bzw. Funktionen, die eine unzulässige Operation ausführen, gehören.

15. Computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines Verfahrens nach einem der Ansprüche 1 bis 9 ausgeführt werden, wenn das Computerprogramm auf der Einrichtung ausgeführt wird.
